(19) Europäisches Patentamt
European Patent Office
Office européen des brevets

(11) Veröffentlichungsnummer : **0 122 423**
**B1**

(12) # EUROPÄISCHE PATENTSCHRIFT

(45) Veröffentlichungstag der Patentschrift : **08.07.87**

(51) Int. Cl.[4] : **C 09 B 62/09**, D 06 P 3/66, D 06 P 3/10

(21) Anmeldenummer : **84102351.8**

(22) Anmeldetag : **05.03.84**

(54) **Faserreaktive Disazofarbstoffe, Verfahren zu ihrer Herstellung und ihre Verwendung zum Färben oder Bedrucken von Substraten.**

(30) Priorität : **15.03.83 DE 3309167**
**16.07.83 DE 3325788**

(43) Veröffentlichungstag der Anmeldung : **24.10.84 Patentblatt 84/43**

(45) Bekanntmachung des Hinweises auf die Patenterteilung : **08.07.87 Patentblatt 87/28**

(84) Benannte Vertragsstaaten :
**CH DE FR GB LI**

(56) Entgegenhaltungen :
**EP-A- 0 040 460**
**EP-A- 0 065 732**
**DE-A- 2 738 823**
**GB-A- 1 220 823**
**US-A- 3 663 526**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**
Erfinder : **Gleinig, Harald, Dr.**
**Eichholzer Weg 100**
**D-5068 Odenthal (DE)**
Erfinder : **Gomm, Walter, Dr.**
**Johann-Burumstrasse 21**
**D-5060 Bergisch-Gladbach 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 122 423 B1

Jouve, 18, rue St-Denis, 75001 Paris, France

**Beschreibung**

Faserreaktive Disazofarbstoffe der allgemeinen Formel

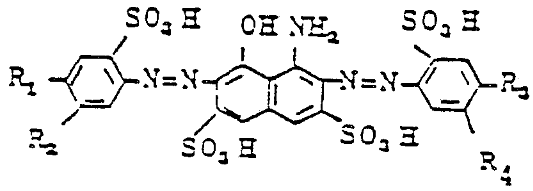 (1)

wobei die Substituenten $R_1$ bis $R_4$ jeweils eine der folgenden Bedeutungskombinationen a), b) oder c) annehmen können :

| | $R_1$ | $R_2$ | $R_3$ | $R_4$ |
|---|---|---|---|---|
| a) | H | 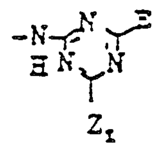 | 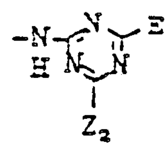 | H |
| b) | H | 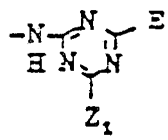 | H | 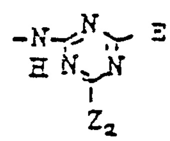 |
| c) | 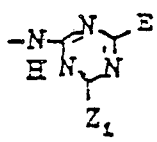 | H | H | 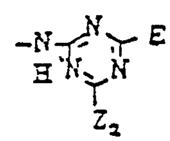 |

wobei ein Substituent E für Fluor und der andere Substituent E für Chlor steht und worin $Z_1$ und $Z_2$ unabhängig voneinander je ein über ein Stickstoffatom an den s-Triazinring gebundener reaktivgruppenfreier Aminrest ist.

Bevorzugt sind dabei solche Farbstoffe der Formel 1, worin $Z_1$ und $Z_2$ für den Rest eines aliphatischen, cycloaliphatischen aromatischen oder heterocyclischen Amins stehen, insbesondere für einen Sulfophenylaminorest oder für einen Rest der Formeln

$-NH_2$, $-NHCH_3$, 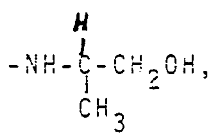, 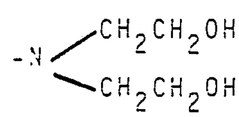

und solche mit der Bedeutungskombination b) für $R_1$ bis $R_4$.

Gegenstand der vorliegenden Erfindung sind weiterhin faserreaktive Disazofarbstoffe der allgemeinen Formel

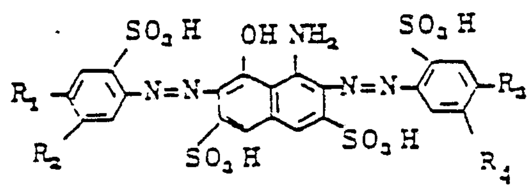 (2)

wobei die Substituenten $R_1$ bis $R_4$ jeweils eine der folgenden Bedeutungskombinationen a), b) oder c) annehmen können :

| | $R_1$ | $R_2$ | $R_3$ | $R_4$ |
|---|---|---|---|---|
| a) | H | 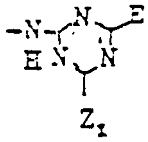 | 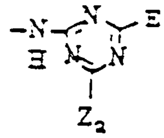 | H |
| b) | H | 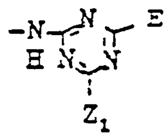 | H | 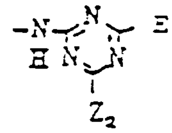 |
| c) | 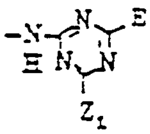 | H | H | 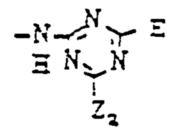 |

wobei E für Fluor steht und worin $Z_1$ und $Z_2$ unabhängig voneinander je ein über ein Stickstoffatom an den s-Triazinring gebundener reaktivgruppenfreier Aminrest ist, ausgenommen die Farbstoffe der EPA 84 810 085.5, insbesondere Farbstoffe der Formel (2), worin $Z_1$ und $Z_2$ einen Anilin-2,5-disulfosäure-, Anilin-2,4-disulfonsäure-, Anthranilsäure-, 2-Amino-toluol-5-sulfonsäure-, 2-Amino-toluol-4-sulfonsäure-, 2-Amino-naphthalin-1,5-disulfonsäure-, Metanilsäure-, p-Sulfanilsäure-, o-Toluidin-, Ammoniak-, 2-Naphthylamin-4,8-disulfonsäure-, Anilin-, N-Methylanilin-, N-Ethylanilin-, 2-Naphthylamin-4,6,8-trisulfonsäure-, 2-Naphthylamin-6-sulfonsäure-, 4-Aminosalicylsäure-, Methylamin-, Diethanolamin-, 3-Methylaminopropannitril-, Semicarbazid-Rest darstellen.

Gegenstand der vorliegenden Erfindung ist weiterhin die Verwendung der Farbstoffe (1) und (2) zum Färben und Bedrucken von cellulosehaltigen Materialien und die mit diesen Farbstoffen gefärbten oder bedruckten cellulosehaltigen Materialien.

Die Reste $Z_1$ und $Z_2$ können Rest von aliphatischen, cycloaliphatischen, aromatischen oder heterocyclischen Aminen sein. Als Reste $Z_1$ und $Z_2$ kommen z. B. die entsprechenden Reste der Amine der Formeln (3) und (4) in Betracht, die im nachfolgenden bei der Beschreibung des Verfahrens zur Herstellung der faserreaktiven Disazofarbstoffe der Formeln (1) und (2) genannt sind. Bevorzugt sind Disazofarbstoffe der Formeln (1) und (2), worin $Z_1$ und $Z_2$ gleiche Reste sind.

Bevorzugte Reste $Z_1$ bzw. $Z_2$ sind :

Sulfophenylrest, $NH_2$, im Alkylteil gegebenenfalls durch OH, O-Alkyl ($C_1$-$C_4$), CN substituiertes

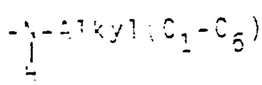 oder 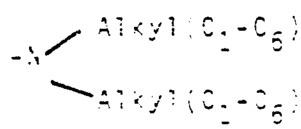

Beispielhaft seien die folgenden Reste $Z_1$ bzw. $Z_2$ aufgeführt :

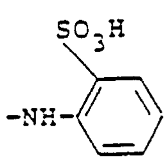 , 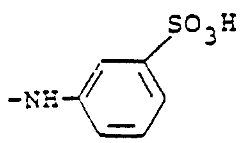 , 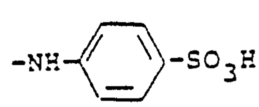 ,

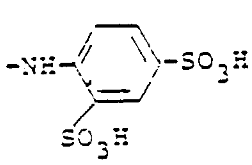 , $-NH_2$ , $-NHCH_3$ ,

$-NH-CH_2CH_2OH$ , 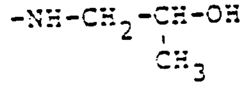 , 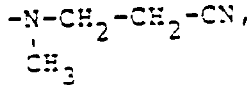 ,

(Fortsetzung)

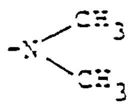 , 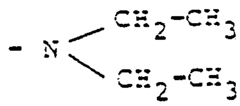 , 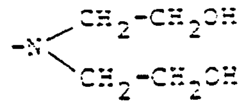 .

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der faserreaktiven Disazofarbstoffen der Formeln (1) und (2) ist dadurch gekennzeichnet, daß man in beliebiger Reihenfolge 2,4,6-Trifluor-s-triazin (Cyanurfluorid) und gegebenenfalls zusätzlich 2,4,6-Trichlor-s-triazin (Cyanurchlorid) mit Aminen der Formeln

$$Z_1—H \tag{3}$$

und

$$Z_2—H \tag{4}$$

und einer Disazoverbindung der Formel

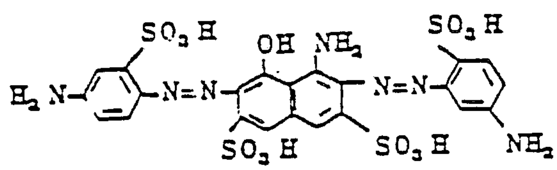 5a)

oder

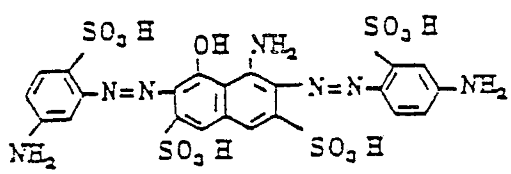 5b)

oder

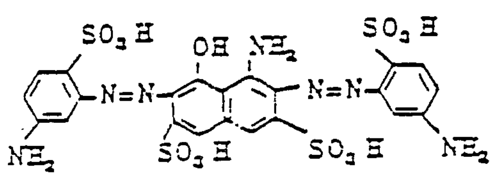 5c)

kondensiert.

Vorzugsweise verwendet man als Ausgangsstoffe Amine der Formeln (3) und (4), worin $Z_1$ und $Z_2$ gleiche Reste sind.

Insbesondere verwendet man als Ausgangsstoffe Amine der Formeln (3) und (4), worin $Z_1$ und $Z_2$ je ein Sulfophenylaminorest ist oder ein Rest aus der Reihe $—NH_2$, $—NHCH_3$, $—NHCH_2CH_2OH$, $—NHCH_2$

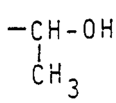

$—N(CH_2CH_2OH)_2$.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus den Formeln (1) und (2). Im allgemeinen führt man die Umsetzung schrittweise nacheinander aus, wobei die Reihenfolge der einfachen Reaktionen zwischen den einzelnen Reaktionskomponenten frei gewählt werden kann.

Wichtige Verfahrensvarianten sind dadurch gekennzeichnet, daß man

a) 2 Mol 2,4,6-Trifluor-s-triazin mit 1 Mol einer Disazoverbindung der Formeln (5a)-(5c) kondensiert und das erhaltene diprimäre Kondensationsprodukt im molaren Verhältnis 1 : 2 mit einer äquimolaren Mischung von Aminen der Formeln (3) und (4) zu einem faserreaktiven Disazofarbstoff der Formel (2) kondensiert.

b) 2 Mol 2,4,6-Trifluor-s-triazin mit 2 Mol eines Amins der Formel (3) kondensiert und das erhaltene primäre Kondensationsprodukt mit 1 Mol einer Disazoverbindung der Formeln (5a) bis (5c) zu einem faserreaktiven Disazofarbstoff der Formel (2) kondensiert ($Z_2 = Z_1$).

c) 2 Mol 2,4,6-Trifluor-s-triazin mit 1 Mol einer Disazoverbindung der Formeln (5a) bis (5c) kondensiert und das erhaltene diprimäre Kondensationsprodukt mit 2 Mol eines Amins der Formel (3) zu einem faserreaktiven Disazofarbstoff der Formel (2) kondensiert ($Z_2 = Z_1$).

Die Disazoverbindungen der Formeln (5a) bis (5c) werden hergestellt durch Kupplung von 1-Oxy-8-aminonaphthalin-3,6-disulfonsäure mit diazotierter 4-Nitranilin-2-sulfonsäure oder 4-Acetylaminoanilin-2-sulfonsäure oder 3-Acetylaminoanilin-6-sulfonsäure im sauren Medium (Kupplung o-ständig zur $NH_2$-Gruppe) und anschließende Kupplung mit diazotierter 3-Acetylaminoanilin-6-sulfonsäure, 4-Acetylaminoanilin-2-sulfonsäure oder 4-Nitranilin-2-sulfonsäure im schwach alkalischen Medium (Kupplung o-ständig zur OH-Gruppe) und anschließende Verseifung der Acetylaminogruppe (n) und gegebenenfalls Reduktion der Nitrogruppe. Als Amine der Formeln (3) bzw. (4), die als Ausgangsstoffe zur Herstellung der faserreaktiven Disazofarbstoffe der Formel (2) und (2) verwendet werden können seien beispielsweise die folgenden genannt :

Ammoniak, Methylamin, Dimethylamin, Ethylamin, Diethylamin, Propylamin, Isopropylamin, Butylamin, Dibutylamin, Isobutylamin, sek.-Butylamin, Hexylamin, Methoxyethylamin, Ethoxyethylamin, Methoxypropylamin, Chlorethylamin, Hydroxyehtylamin, Dihydroethylamin, Hydroxypropylamin, Aminoethansulfonsäure, β-Sulfatoethylamin, Benzylamin, Cyclohexylamin, Anilin, o-, m- und p-Toluidin, 2,3-, 2,4-, 2-5-, 2,6-, 3,4- und 3,5-Dimethylanilin, o-, m- und p-Chloranilin, N-Methylanilin, N-Ethylanilin, 3- oder 4-Acetylaminanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-4-methylanilin, 3-Nitro-4-methylanilin, o-, m- und p-Anisidin, o-, m- und p-Phenetidin, 2-Methoxy-5-methylanilin, 2-Ethoxy-5-methoxyanilin, 4-Bromanilin, 4-Aminophenylsulfamid, 3-Trifluormethylanilin, 3- und 4-Aminophenylharnstoff, 1-Naphthylamin, 2-Naphthylamin, 2-Amino-1-hydroxynaphthalin, 1-Amino-4-hydroxy-naphthalin, 1-Amino-8-hydroxy-naphthalin, 1-Amino-2-hydroxy-naphthalin, 1-Amino-7-hydroxy-naphthalin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Amino-toluol-4-, sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, 3-, 4-, 5-, 6-, 7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8- -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7-, und -6,8- disulfonsäure, 1-Naphthylamin-2,4,6-, -2,4,7-, -2,57-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenthiazol, 5-, 6- und 8-Aminochinolin, 2-Aminopyrimidin, Morpholin, Piperidin und Piperazin.

N-β-Hydroxyethylanilin, Semicarbazid, Benzoesäurehydrazid, 4-(β-Sulfatoethylsulfonyl)-anilin3-(β-Sulfatoethylsulfonyl)-anilin, 4-Amino-1-methoxy-benzol-2-sulfonsäure, 4-Amino-1-ethoxy-benzol-2-sulfonsäure, 4-Aminophenol-6-sulfonsäure, 2-Aminophenol-5-sulfonsäure, 4-Aminotoluol-2-sulfonsäure, β-N-Methylaminopropionitril, β-Aminopropionitril, Aminoessigsäure.

Die Reaktivfarbstoffe der Formel (1) und (2) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden ; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Reaktivfarbstoffe der Formel (1) und (2) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen. Die Färbungen sind ätzbar.

Die Reaktivfarbstoffe der Formel (1) und (2) eignen sich zum Färben und Bedrucken der verschiedensten Substrate, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen. Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

Beispiel 1

Zu einer eiskalten, neutralen Lösung von 25,3 g Anilin-2,5-disulfosäure in 400 ml Wasser tropft man in 10 Minuten 14,8 g Cyanurfluorid und hält durch gleichzeitige Zugabe von 15 %iger Sodalösung den pH zwischen 5,5 und 6,5. Nach vollständiger Acylierung gießt man das erhaltene Kondensationsprodukt zu einer neutralen Lösung von 35,9 g des Disazofarbstoffs der Formel

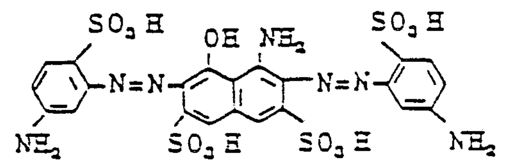

in 400 ml Eiswasser, erwärmt langsam auf 10-15 °C und hält den pH des Reaktionsgemisches durch Zutropfen von 15 %iger Sodalösung zwischen 5,5 und 6,5.

Nach erfolgter Acylierung der beiden Aminogruppen wird der gebildete Farbstoff durch Zugabe von 10 Vol % Kochsalz isoliert und abfiltriert. Die erhaltene Farbstoffpaste wird mit einer konzentrierten, wäßrigen Lösung von 2 Teilen Dinatriumhydrogenphosphat vermischt und im Vakuum bei 50 °C getrocknet. Der so erhaltene Farbstoff der Formel

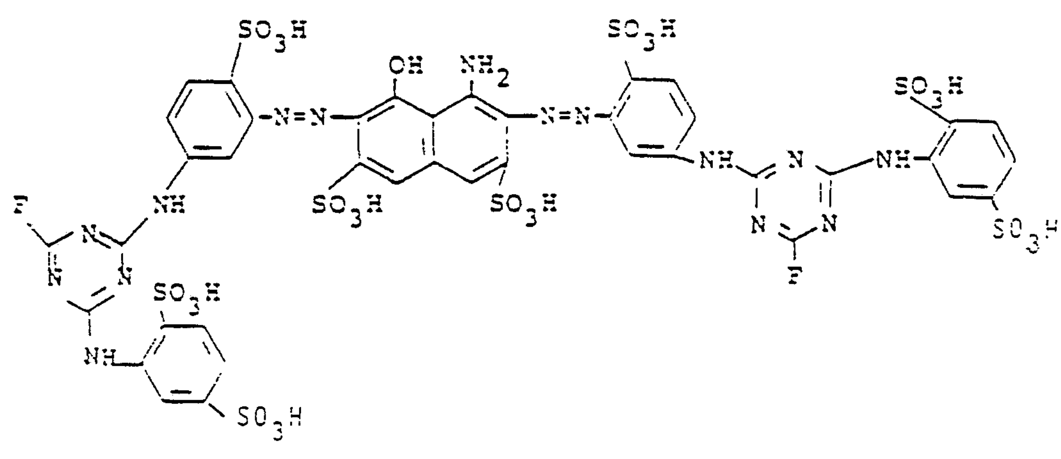

färbt Baumwolle in marineblauen Tönen. Durch Diacylierung des obigen Disazofarbstoffes nach den Angaben von Beispiel 1 mit 2 Äquivalenten der aus den unten aufgeführten Aminen hergestellten Diflurotriazinverbindungen erhält man weitere Farbstoffe, die Baumwolle ebenfalls in marineblauen Tönen färben.

Anilin-2,4-disulfonsäure
Anthranilsäure
2-Amino-toluol-5-sulfonsäure
2-Amino-toluol-4-sulfonsäure
2-Amino-naphthalin-1,5-disulfonsäure

Durch Diacylierung von 35,9 g der folgenden Disazofarbstoffe

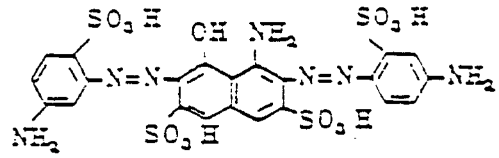

bzw.

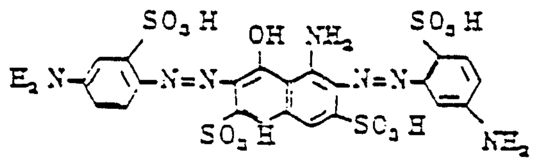

mit 2 Äquivalenten der nach obigem Beispiel hergestellten Difluortriazinverbindungen erhält man gleichfalls wertvolle Farbstoffe, die Baumwolle in grünstichig blauen Tönen färben.

Beispiel 2

Zu einer eiskalten, neutralen Lösung von 35,9 g des Disazofarbstoffes der Formel

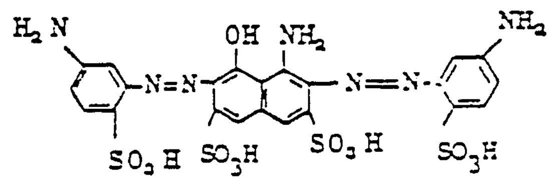

in 500 ml Wasser (hergestellt durch saure und alkalische Kupplung von 2-Äquivalenten 3-Acetylaminoanilin-6-sulfonsäure auf 1-Amino-8-naphthol-3,6-disulfonsäure und anschließende Verseifung der beiden Acetylaminogruppen) läßt man im Laufe von 5 Minuten 14,8 g Cyanurfluorid zutropfen und hält durch gleichzeitiges Zutropfen von 1-n Natriumhydroxydlösung das pH des Reaktionsgemisches zwischen 6 und 7.

Nach vollständiger Acylierung der beiden Aminogruppen gibt man zum di-primären Kondensationsprodukt eine neutrale Lösung von 17,3 g Metanilsäure in 400 ml Wasser, erwärmt auf 10-15 °C und hält das pH während der 2. Kondensation mit 1-n Natronlauge zwischen 6 und 7. Der entstandene Farbstoff wird abgeschieden, mit 2 Teilen Dinatriumhydrogenphosphat gepuffert und im Vakuum bei 50 °C getrocknet. Der so erhaltene Farbstoff färbt Baumwolle in marineblauen Tönen und besitzt folgende Struktur :

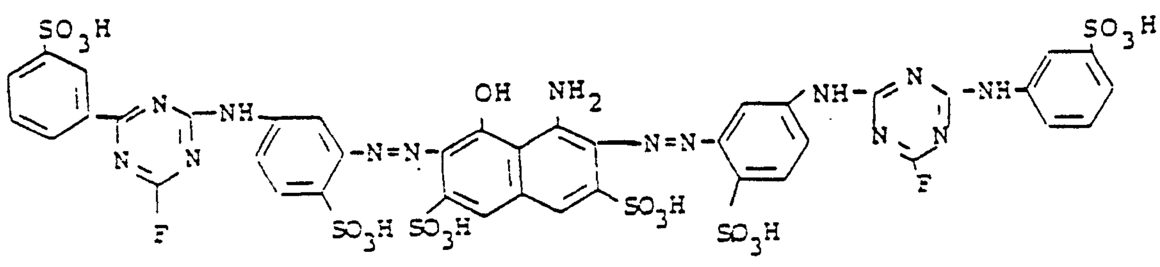

Ähnliche Farbstoffe werden erhalten, wenn der Tetrafluortriazinfarbstoff des obigen Beispiels anstelle von Metanilsäure mit 2 Äquivalenten der folgenden Amine umgesetzt wird.

p-Sulfanilsäure
o-Toluidin
Ammoniak
2-Naphthylamin-4,8-disulfonsäure
Anilin
N-Methylanilin
N-Ethylanilin

2-Naphthylamin-4,6,8-trisulfonsäure
2-Naphthylamin-6-sulfonsäure

4-Aminosalicylsäure
Methylamin

Diethanolamin
3-Methylaminopropannitril
Semicarbazid

Nach den Angaben des obigen Beispiels erhält man Baumwolle grünstichig blau färbende Reaktivfarbstoffe, wenn man 35,9 g der folgenden Disazofarbstoffe einsetzt

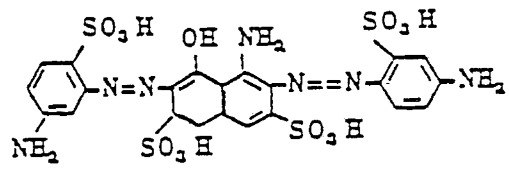

bzw.

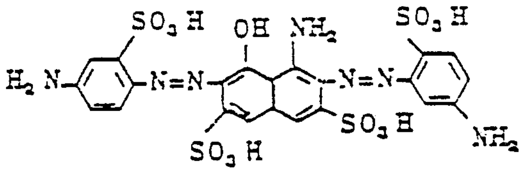

und nach Kondensation zum Tetrafluortriazinfarbstoff mit 2 Äquivalenten der aufgeführten Amine umsetzt.

Beispiel 3

21,6 g 2-Amino-4-(2'-chlor-4'-amino-triazinylamino)-benzol-sulfonsäure-1 werden in 500 ml Wasser gelöst. Nach Zugabe von 70 ml 10 %iger Natirumnitritlösung läßt man in eine Vorlage aus 200 ml Eiswasser und 28 ml konz. Salzsäure einlaufen. Man rührt kurz nach, entfernt den Überschuß an Nitrit mit Amidosulfonsäure und tropft dann eine neutrale Lösung von 31,9 g H-Säure in 100 ml Wasser ein. Man rührt solange bis die Kupplung o-ständig zur $NH_2$-Gruppe der H-Säure beendet ist.

In der gleichen Weise wie oben beschrieben bereitet man aus 19,9 g 2-Amino-4-(2'-fluor-4'-amino-triazinylamino-)-benzolsulfonsäure-1 die Diazoverbindung und fügt sie zu der Suspension des Monoazofarbstoffs. Die Kupplung o-ständig zur OH-Gruppe wird durch Einstellen des pH auf 6-7 mittels Natriumhydrogencarbonat herbeigeführt. Nach beendeter Kupplung wird der Farbstoff ausgesalzen und abgesaugt. Nach dem Trocknen und Mahlen erhält man ein dunkles Farbstoffpulver, das Baumwolle in marineblauen Tönen färbt.

Der Farbstoff entspricht der Formel

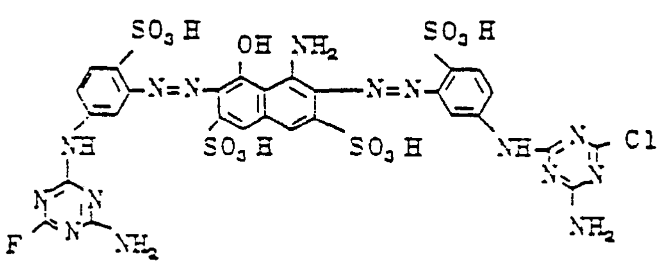

**Patentansprüche**

1. Faserreaktive Disazofarbstoffe der allgemeinen Formel

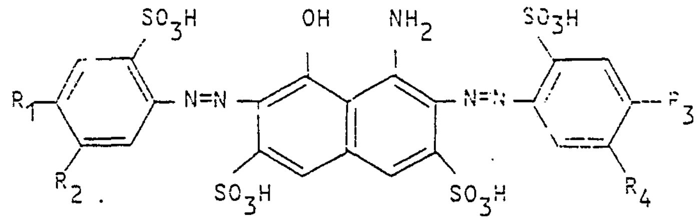

wobei die Substituenten $R_1$ bis $R_4$ jeweils eine der folgenden Bedeutungskombinationen a), b) oder c) annehmen können :

| | $R_1$ | $R_2$ | $R_3$ | $R_4$ |
|---|---|---|---|---|
| a) | H | 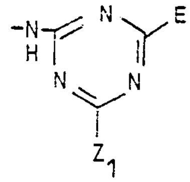 | 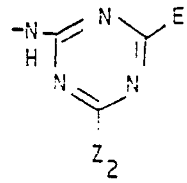 | H |
| b) | H | 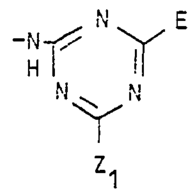 | H | 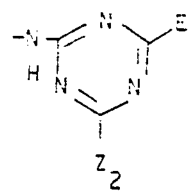 |
| c) | 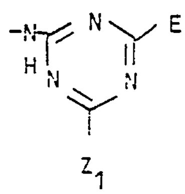 | H | H | 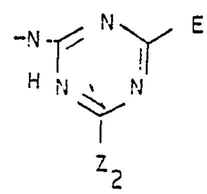 |

wobei ein Substituent E für Fluor und der andere Substituent E für Chlor steht und worin $Z_1$ und $Z_2$ unabhängig voneinander je ein über ein Stickstoffatom an den s-Triazinring gebundener reaktivgruppenfreier Aminrest ist.

2. Faserreaktive Disazofarbstoffe gemäß Anspruch 1, dadurch gekennzeichnet, daß $Z_1$ und $Z_2$ für den Rest eines aliphatischen, cycloaliphatischen, aromatischen oder heterocyclischen Amins steht.

3. Faserreaktive Disazofarbstoffe gemäß Anspruch 1) und 2), dadurch gekennzeichnet, daß $Z_1$ und $Z_2$ jeweils für einen Sulfophenylaminorest oder für einen Rest der Formel

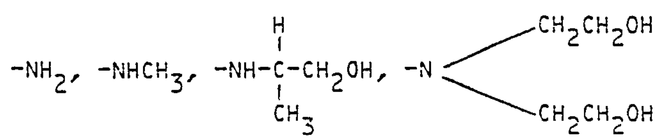

steht.

4. Faserreaktive Disazofarbstoffe der allgemeinen Formel

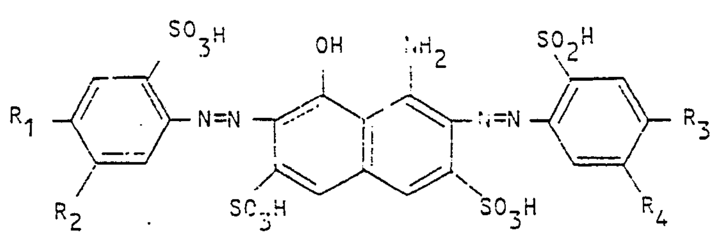

wobei die Substituenten $R_1$ und $R_4$ jeweils eine der folgenden Bedeutungskombinationen a), b) oder c) annehmen können :

(Siehe Formel Seite 10 f.)

| | $R_1$ | $R_2$ | $R_3$ | $R_4$ |
|---|---|---|---|---|
| a) | H | 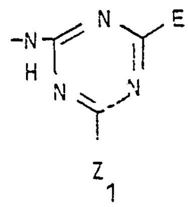 | 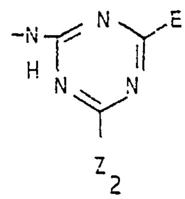 | H |
| b) | H | 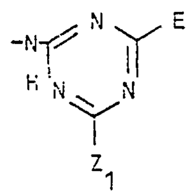 | H | 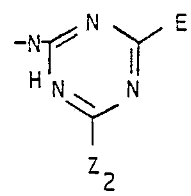 |
| c) | 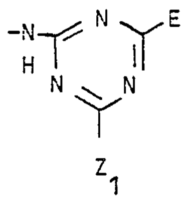 | H | H | 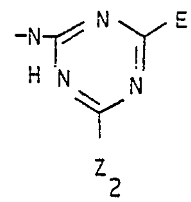 |

wobei E für Fluor steht und worin $Z_1$ und $Z_2$ unabhängig voneinander je ein über ein Stickstoffatom an den s-Triazinring gebundener reaktivgruppenfreier Aminrest ist, ausgenommen die Farbstoffe der EPA 84 810 085.5.

5. Farbstoffe des Anspruchs 4, worin $Z_1$ und $Z_2$ einen Anilin-2,5-disulfosäure-, Anilin-2,4-disulfonsäure-, Anthranilsäure-, 2-Amino-toluol-5-sulfonsäure-, 2-Amino-toluol-4-sulfonsäure-, 2-Amino-naphthalin-1,5-disulfonsäure-, Metanilsäure-, p-Sulfanilsäure-, o-Toluidin, Ammoniak-, 2-Naphthylamin-4,8-disulfonsäure-, Anilin-, N-Methylanilin-, N-Ethylanilin-, 2-Naphthylamin-4,6,8-trisulfonsäure-, 2-Naphthylamin-6-sulfonsäure-, 4-Aminosalicylsäure-, Methylamin-, Diethanolamin-, 3-Methylaminopropannitril-, Semicarbazid-Rest darstellen.

6. Verwendung der Farbstoffe der Ansprüche 1-5 zum Färben und Bedrucken von cellulosehaltigen Materialien.

7. Mit den Farbstoffen der Ansprüche 1-5 gefärbte oder bedruckte cellulosehaltige Materialien.

## Claims

1. Fibre-reactive disazo dyestuffs of the general formula

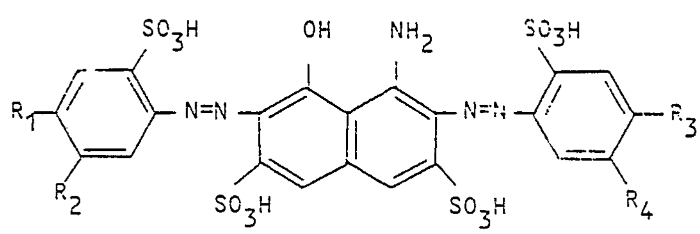

wherein the substituents $R_1$ to $R_4$ can each assume one of the following meaning combinations a), b) or c) :

| | $R_1$ | $R_2$ | $R_3$ | $R_4$ |
|---|---|---|---|---|
| a) | H | 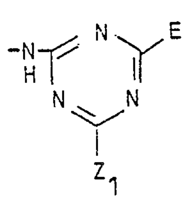 | 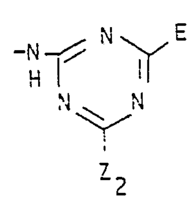 | H |

(Fortsetzung)

| | $R_1$ | $R_2$ | $R_3$ | $R_4$ |
|---|---|---|---|---|
| b) | H | 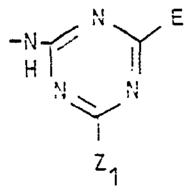 | H | 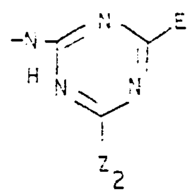 |
| c) | 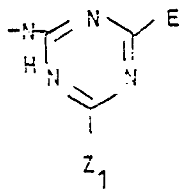 | H | H | 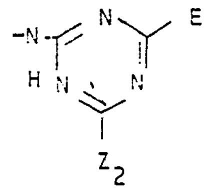 |

wherein one E substituent represents fluorine and the other E substituent represents chlorine and wherein $Z_1$ and $Z_2$ independently of each other are each an amine radical which is bonded to the s-triazine ring via a nitrogen atom and which is free of reactive groups.

2. Fibre-reactive disazo dyestuffs according to Claim 1, characterised in that $Z_1$ and $Z_2$ represent the radical of an aliphatic, cycloaliphatic, aromatic or heterocyclic amine.

3. Fibre-reactive disazo dyestuffs according to Claim 1) and 2), characterised in that $Z_1$ and $Z_2$ each represent a sulphophenylamino radical or a radical of the formula

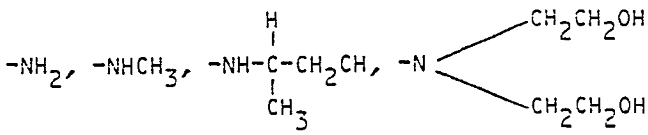

4. Fibre-reactive disazo dyestuffs of the general formula

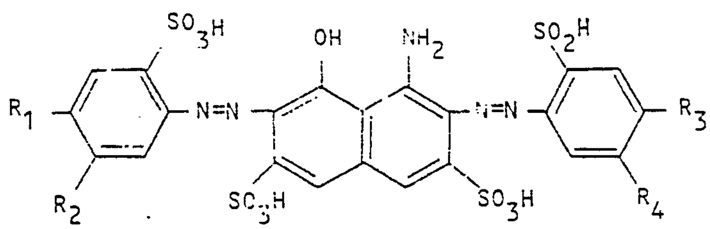

wherein the substituents $R_1$ and $R_4$ can each assume one of the following meaning combinations a), b) or c) :

| | $R_1$ | $R_2$ | $R_3$ | $R_4$ |
|---|---|---|---|---|
| a) | H | 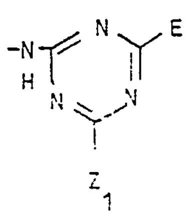 | 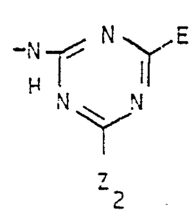 | H |
| b) | H | 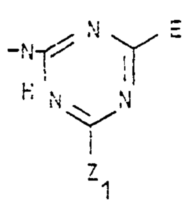 | H | 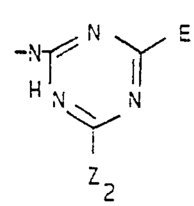 |

(Fortsetzung)

| | $R_1$ | $R_2$ | $R_3$ | $R_4$ |
|---|---|---|---|---|
| c) | 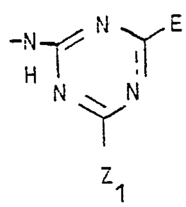 | H | H | 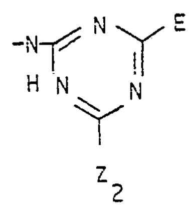 |

wherein E represents fluorine and wherein $Z_1$ and $Z_2$ independently of each other are each an amine radical which is bonded to the s-triazine ring via a nitrogen atom and which is free of reactive groups, with the exception of the dyestuffs of EPA 84 810 085.5.

5. Dyestuffs of Claim 4, wherein $Z_1$ and $Z_2$ represent an aniline-2,5-disulphonic acid, aniline-2,4-disulphonic acid, anthranilic acid, 2-amino-toluene-5-sulphonic acid, 2-amino-toluene-4-sulphonic acid, 2-amino-naphthalene-1,5-disulphonic acid, metanilic acid, p-sulphanilic acid, o-toluidine, ammonia, 2-naphthylamine-4,8-disluphonic acid, aniline, N-methylaniline, N-ethylaniline, 2-naphthylamine-4,6,8-trisulphonic acid, 2-naphthylamine-6-sulphonic acid, 4-aminosalicylic acid, methylamine, diethanolamine, 3-methylaminopropionitrile or semicarbazide radical.

6. Use of the dyestuffs of Claims 1-5 for dyeing and printing cellulose-containing materials.

7. Cellulose-containing materials dyed or printed using the dyestuffs of Claims 1-5.

**Revendications**

1. Colorants bisazoïques réactifs sur les fibres, de formule générale

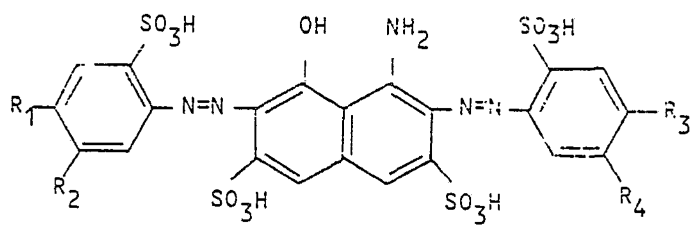

dans laquelle les substituants $R_1$ à $R_4$ peuvent avoir chaque fois une des combinaisons de significations a), b) ou c) suivantes :

| | $R_1$ | $R_2$ | $R_3$ | $R_4$ |
|---|---|---|---|---|
| a) | H | 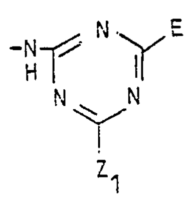 | 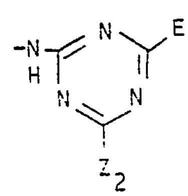 | H |
| b) | H | 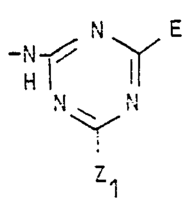 | H | 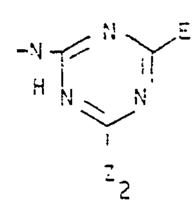 |
| c) | 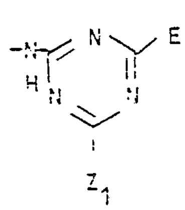 | H | H | 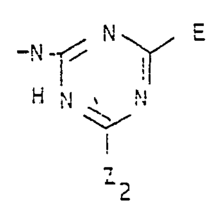 |

un substituant E pouvant représenter le fluor et l'autre substituant E pouvant représenter le chlore et dans lesquelles $Z_1$ et $Z_2$ représentent chacun, indépendamment l'un de l'autre, un reste amine exempt de groupe réactif, lié au noyau striazine par un atome d'azote.

2. Colorants bisazoïques réactif sur les fibres selon la revendication 1, caractérisés en ce que $Z_1$ et $Z_2$ représentent le reste d'une amine aliphatique, cycloaliphatique, aromatique ou hétérocyclique.

3. Colorants bisazoïques réactifs sur les fibres selon les revendications 1 et 2, caractérisés en ce que $Z_1$ et $Z_2$ représentent chaque fois un reste sulfophénylamino ou un reste de formule

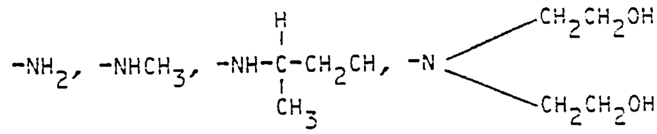

4. Colorants bisazoïques réactifs sur les fibres de formule générale.

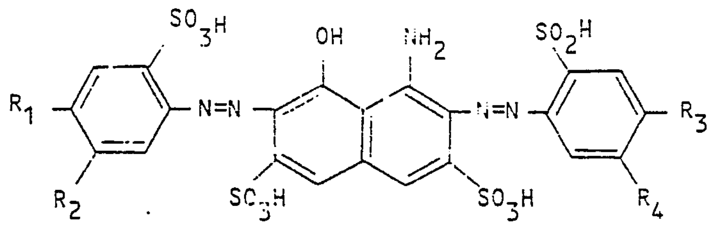

dans laquelle les substituants $R_1$ et $R_4$ peuvent chaque fois prendre l'une des combinaisons de significations a), b) ou c) suivantes :

| | $R_1$ | $R_2$ | $R_3$ | $R_4$ |
|---|---|---|---|---|
| a) | H | 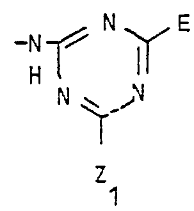 | 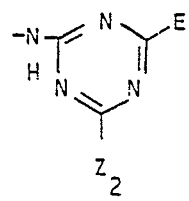 | H |
| b) | H | 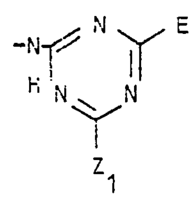 | H | 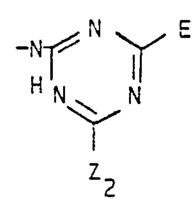 |
| c) | 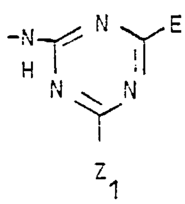 | H | H | 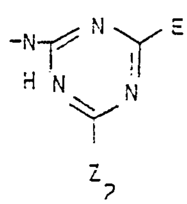 |

E représentant le fluor et où $Z_1$ et $Z_2$ sont chaque fois, indépendamment l'un de l'autre, un reste amine exempt de groupe réactif, relié au noyau s-triazine par un atome d'azote, à l'exclusion des colorants de la demande de brevet européen EPA 84810 085.5.

5. Colorants selon la revendication 4, dans lesquels $Z_1$ et $Z_2$ représentent un reste d'acide aniline-2,5-disulfonique, d'acide aniline-2,4-disulfonique, d'acide anthranilique, d'acide 2-aminotoluène-5-sulfonique, d'acide 2-amino-toluène-4-sulfonique, d'acide 2-amino-naphtalene-1,5-disulfonique, d'acide métanilique, d'acide p-sulfanilique, d'o-toluidine, d'ammoniac, d'acide 2-naphtylamine-4,8-disulfonique,

d'aniline, de N-méthylaniline, de N-éthylaniline, d'acide 2-naphtylamine-4,6,8-trisulfonique, d'acide 2-naphtylamine-6-sulfonique, d'acide 4-aminosalicylique, de méthylamine, de diéthanolamine, de 3-méthylaminopropionitrile ou de semicarbazide.

6. Utilisation des colorants selon les revendications 1-5 pour la teinture et l'impression de matériaux cellulosiques.

7. Matériaux cellulosiques teints ou imprimés avec les colorants selon les revendications 1-5.